Europäisches Patentamt

European Patent Office

Office européen des brevets

(19)

(11) Veröffentlichungsnummer : **0 198 229**
**B1**

(12) **EUROPÄISCHE PATENTSCHRIFT**

(45) Veröffentlichungstag der Patentschrift :
15.06.88

(51) Int. Cl.⁴ : **B 23 H   7/26**, B 23 H 11/00

(21) Anmeldenummer : 86103413.0

(22) Anmeldetag : 13.03.86

(54) Vorrichtung zum Abtrennen einer band- oder drahtförmigen Elektrode einer Elektroerosionsmaschine.

(30) Priorität : 01.04.85 DE 3511930

(43) Veröffentlichungstag der Anmeldung :
22.10.86 Patentblatt 86/43

(45) Bekanntmachung des Hinweises auf die Patenterteilung : 15.06.88 Patentblatt 88/24

(84) Benannte Vertragsstaaten :
CH DE FR GB IT LI LU SE

(56) Entgegenhaltungen :
DE-A- 2 755 740
DE-A- 3 116 161
PATENT ABSTRACTS OF JAPAN, unexamined applications, Field M, Vol. 5, No. 162, 17. Oktober 1981 THE PATENT OFFICE JAPANESE GOVERNMENT Seite 119M 92

(73) Patentinhaber : AG für industrielle Elektronik AGIE Losone bei Locarno
CH-6616 Losone/Locarno (CH)

(72) Erfinder : Lodetti, Attilio
Via La Pare 12
CH-6616 Losone (CH)
Erfinder : Tobler, Karl
CH-6673 Maggia (CH)

(74) Vertreter : EGLI-EUROPEAN PATENT ATTORNEYS
Widenmayerstrasse 5
D-8000 München 22 (DE)

EP 0 198 229 B1

## Beschreibung

Die Erfindung bezieht sich auf eine Vorrichtung gemäss dem Oberbegriff des Patentanspruches 1.

Eine derartige Vorrichtung ist aus der DE-OS 27 55 740 bekannt. Dort wird die Elektrode von einem Transportrollenpaar einer Schneideinrichtung zugeführt, welche einen drehbaren, mehrkantigen Meissel und ein Gegenwerkzeug in Form eines Ambosses aufweist. Die abgetrennten Drahtstücke fallen unmittelbar nach der Abtrenneinrichtung durch eine Entsorgungsöffnung aus der Vorrichtung heraus. Eine ähnliche Vorrichtung ist aus der JP-OS 56-89 441 bekannt, bei der die Schneideinrichtung zwei Rotationskörper aufweist, deren einer radial ausgerichtete Klingen besitzt und deren anderer als Gegenwerkzeug mit glatter Oberfläche ausgelegt ist.

Bei beiden bekannten Vorrichtungen fallen die abgeschnittenen Drahtstücke unmittelbar nach der Schneideinrichtung heraus, so dass der entsprechende Auffangbehälter unmittelbar an der Schneideinrichtung angeordnet sein muss. Da die Drahterosionsmaschine selbst eine gewisse Grundfläche einnimmt, muss der unter elektrischer Spannung stehende Draht eine gewisse Weglänge von der Erosionszone zum Entsorgungssystem geführt werden. Da der Draht längs der Strecke zwischen Erosionszone und Entsorgungssystem noch unter elektrischer Spannung steht, müssen aufwendige Massnahmen zu dessen Führung und Isolierung getroffen werden.

Es ist daher wünschenswert, die Strecke zwischen Erosionszone und Entsorgungssystem möglichst kurz zu machen.

Aufgabe der Erfindung ist es daher, die Vorrichtung der eingangs genannten Art so auszubilden, dass sie unmittelbar nach der Erosionszone angeordnet werden kann.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, den Draht unmittelbar nach der Erosionszone zu schneiden und ihn in geschnittenem Zustand zu einem entfernter liegenden Aufnahmebehälter zu fördern.

Hierzu verwendet die Erfindung einen Gurtförderer, zwischen dessen Bändern (Ober- und Untertrum) der Draht gefördert wird, wobei die Bänder einander gegenüberliegende Schneidöffnungen aufweisen, in welche Schneideinrichtungen eingreifen. Die Elektrode wird also am Anfang des Gurtförderers zwischen den Bändern bereits geschnitten und dann in geschnittenem Zustand zu einem beliebig weit entfernt angeordnetem Entsorgungsbehälter gefördert.

Die geforderte synchrone Bewegung zwischen den beiden Bändern und den Schneideinrichtungen wird nach den Merkmalen des Anspruches 2 durch eine Verzahnung von Bändern und zugeordneten Antriebsrädern erreicht.

Ein sehr frühzeitiges Schneiden der Elektrode erhält man mit den Merkmalen des Anspruches 3 dadurch, dass die (eingangsseitigen) Antriebsräder gleichzeitig die die Schneid- und Gegenelemente tragenden Räder der Schneideinrichtung sind.

Nach der Variante des Anspruches 4 sind die Funktionen « Antrieb » und « Schneiden » getrennt, wobei die synchrone Bewegung der entsprechenden Räder ebenfalls über Zahnriemen erfolgt.

Einen auf die von der Elektroerosionsmaschine vorgegebene Drahtvorschubgeschwindigkeit angepasste Schneidvorrichtung wird mit den Merkmalen des Anspruches 5 erreicht.

Eine einwandfreie und sichere Synchronisation der Vorrichtung erhält man mit den Merkmalen des Anspruches 6.

Mit den Merkmalen der Ansprüche 7 und 8 wird die Schneideinrichtung weitergebildet.

Mit den Merkmalen der Ansprüche 9 und 10 wird einerseits die kürzest mögliche Distanz zwischen Erosionszone und Entsorgungseinrichtung erreicht und andererseits (Anspruch 10) die Entsorgungseinrichtung mit einer Doppelfunktion ausgestattet, nämlich zum einen als Abzugseinrichtung für die Elektrode aus der Arbeitszone und andererseits als Transporteinrichtung für die Entsorgungseinrichtung.

Im folgenden wird die Erfindung anhand von Ausführungsbeispielen im Zusammenhang mit der Zeichnung ausführlicher erläutert. Es zeigt :

Fig. 1 eine schematische Seitenansicht eines ersten Ausführungsbeispieles der Vorrichtung nach der Erfindung ;

Fig. 2 eine Draufsicht auf die Vorrichtung der Fig. 1 ;

Fig. 3 eine Seitenansicht eines zweiten Ausführungsbeispieles der Vorrichtung nach der Erfindung ; und

Fig. 4 eine Draufsicht auf die Vorrichtung der Fig. 3.

Gleiche Bezugszeichen in den einzelnen Figuren bezeichnen gleiche bzw. einander entsprechende Teile.

Eine von der — nicht dargestellten — Elektroerosionsmaschine abgeförderte band- oder drahtförmige Elektrode 1 wird einem Gurtförderer zugeleitet, der aus zwei einander gegenüberliegenden, endlosen Bändern 3 und 4 besteht, die zwischen sich die Elektrode 1 einschliessen. Beide Bänder 2 und 3 werden von je einem Antriebsrad 4 bzw. 5 angetrieben, wobei die Antriebsräder 4 und 5 synchron zueinander laufen.

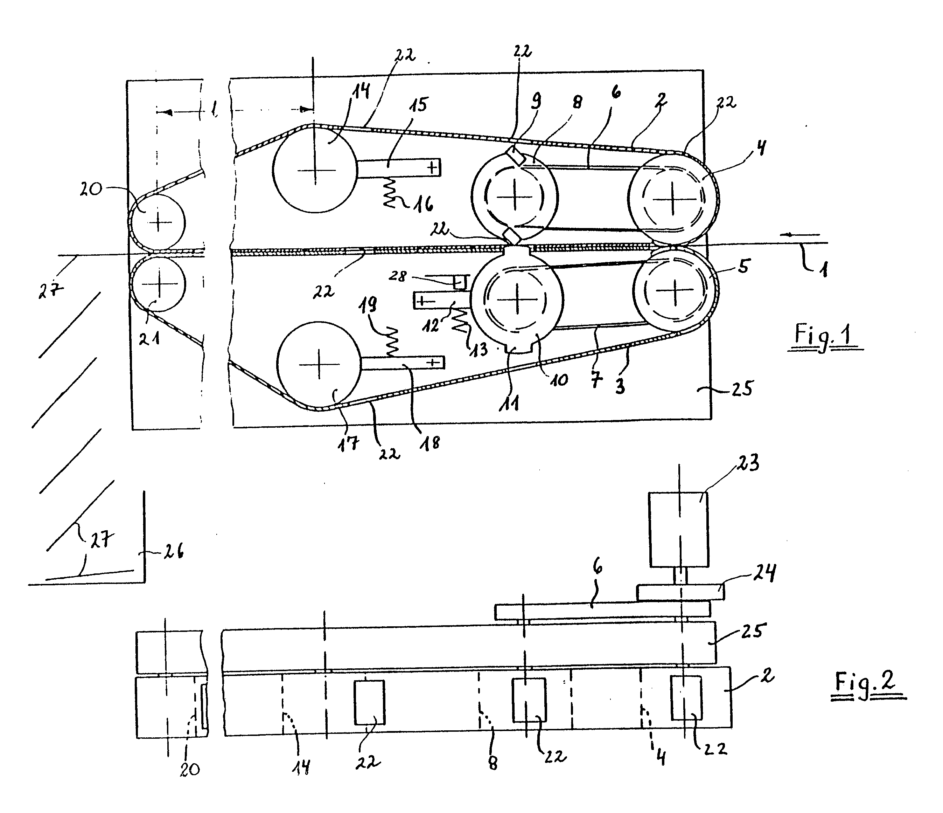

Im ersten Ausführungsbeispiel der Fig. 1 und 2 treiben die Antriebsräder 4 und 5 über je einen Zahnriemen 6 und 7 ein Schneidrad 8, welches an seinem Umfang verteilt Schneidelemente 9 aufweist bzw. ein Anpressrad 10, welches an seinem Umfang verteilt entsprechende Anpressplatten 11 aufweist. Das Schneidrad 8 und das Anpressrad 10 bilden zusammen die Schneideinrichtung zum Abtrennen der Elektrode. Im dargestellten Ausführungsbeispiel hat das Schneidrad zwei um 180° versetzt angeordnete Schneidelemente, während das Anpressrad 10 ebenfalls zwei um 180° versetzt angeordnete Anpressplatten 11 besitzt, die als Vorsprünge ausgebildet sind. Das Anpressrad 10 ist an einem Spannarm 12 schwenkbar gelagert, wobei es über eine Feder 13 in Richtung auf das Schneidrad 8 gedrückt wird. Ein Anschlag 28 begrenzt den Schwenkbereich des Anpressrades 10.

Die beiden endlosen Bänder 2 und 3 werden über Spannrollen 14 bzw. 17, die an Spannarmen 15 bzw. 18 schwenkbar gelagert sind, vorgespannt und zwar mittels der auf die Spannarme 15 bzw. 18 wirkenden Federn 16 bzw. 19. Am auslaufseitigen Ende sind die Bänder 2 und 3 über Umlenkrollen 20 bzw. 21 geführt. Vom einlaufseitigen Ende (Antriebsräder 4 und 5) bis zum auslaufseitigen Ende (Umlenkrollen 20 bzw. 21) verlaufen die beiden Bänder 2 und 3 geradlinig parallel zueinander, wobei sie die Elektrode 1 zwischen sich führen und damit transportieren.

Die beiden Bänder 2 und 3 besitzen nun mehrere, in Bandrichtung in konstantem Abstand zueinander angeordnete Schneidöffnungen 22. Die beiden Bänder 2 und 3 sind dabei so zueinander ausgerichtet, dass ihre Schneidöffnungen 22 in dem Bereich, in welchem die Abschnitte der Bänder 2 und 3 parallel zueinander laufen, miteinander fluchten. Mit anderen Worten liegen sich die Schneidöffnungen 22 gegenüber, so dass im Bereich dieser Schneidöffnungen der zwischen den beiden Bändern geführte Draht frei von oben und unten zugänglich ist. Die Abstände der Schneidöffnungen 22 in Bandrichtung entsprechen dabei exakt den Abständen der Schneidelemente 9 bzw. der Anpressplatten 11 in Umfangsrichtung des Schneidrades 8 bzw. des Anpressrades 1. Dabei sind die beiden Bänder 2 und 3 gegenüber dem Schneid- bzw. dem Anpressrad 8 bzw. 10 wiederum so ausgerichtet, dass bei Bewegung der Bänder 2 und 3 und der Räder 8 und 10 die Schneidelemente 9 bzw. die Anpressplatten 11 jeweils genau in die Schneidöffnungen 22 eingreifen, so dass die Elektrode dort abgeschnitten wird. Die Schnittlänge entspricht dabei dem Abstand benachbart zueinander liegender Schneidöffnungen 22. Nach dem Abtrennen bzw. Schneiden werden die vereinzelten bzw. abgetrennten Drahtstücke 27 zwischen den beiden Bändern 2 und 3 weiter transportiert, bis sie schliesslich am auslaufseitigen Ende in den Entsorgungsbehälter 26 fallen. Der Abstand von der Schneideinrichtung bis zum auslaufseitigen Ende kann dabei beliebig lang gewählt werden, so dass der Entsorgungsbehälter 26 beliebig weit von der Elektroerosionsmaschine aufgestellt werden kann. Nach dem Abtrennen der Drahtstücke an der Schneideinrichtung haben die einzelnen Drahtstücke 27 keinen elektrischen Kontakt mehr zueinander, so dass sie auch spannungsfrei sind.

Wie insbesondere aus Fig. 2 zu erkennen, sind die einzelnen Räder bzw. die Schwenkarme an einem Rahmen 25 gelagert. Auch sind die beiden Antriebsräder 4 und 5 starr miteinander gekoppelt und zwar beispielsweise über ein Getriebe 24, das ein Uebersetzungsverhältnis von 1 : 1 hat. Im Ausführungsbeispiel der Fig. 1 und 2 ist ein Elektromotor 23 für den Antrieb der Antriebsräder 4 und 5 vorgesehen. Es ist jedoch auch möglich, die gesamte Vorrichtung über einen Treibriemen, beispielsweise einen Zahnriemen anzutreiben, der mit dem Band- bzw. Drahtantrieb der Elektroerosionsmaschine gekoppelt ist.

Um einen synchronen und phasenstarren Lauf zwischen den Bändern 2 und 3 zu gewährleisten, sind die Bänder 2 und 3 mit einer Innenverzahnung versehen, während die Antriebsräder 4 und 5 eine entsprechende Aussenverzahnung haben. In ähnlicher Weise ist ein synchroner und phasenstarrer Antrieb der Schneideinrichtung durch die Zahnriemen 6 und 7 gewährleistet, die an entsprechenden Verzahnungen der Räder 4 und 8 bzw. 5 und 10 aufliegen.

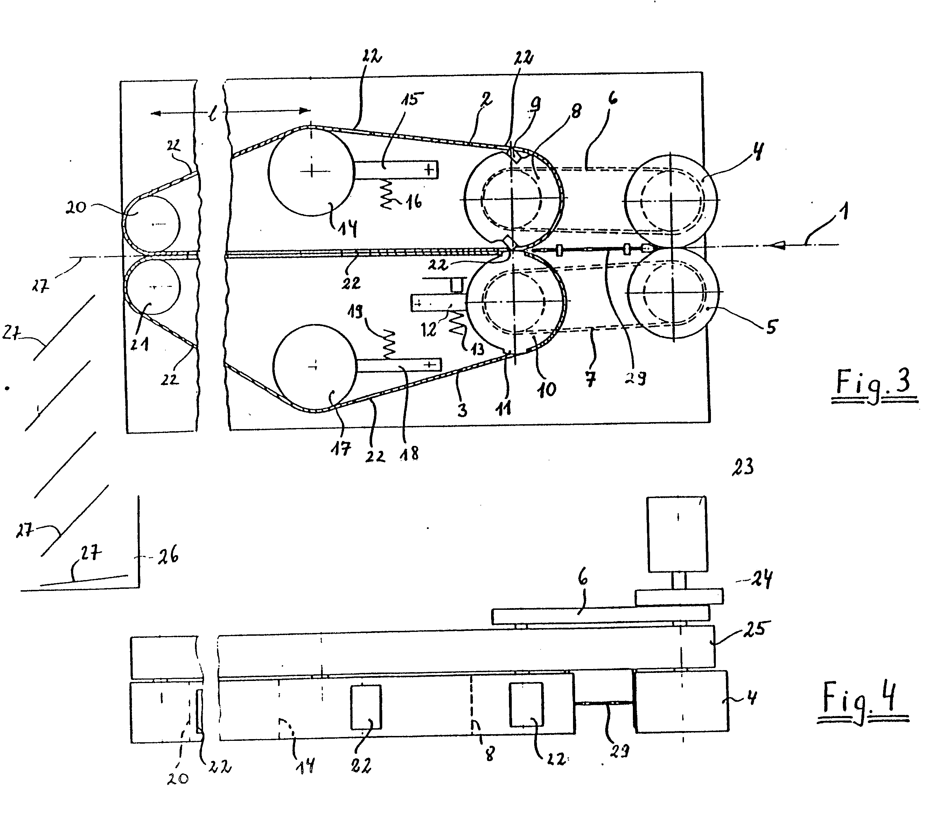

Das Ausführungsbeispiel der Fig. 3 und 4 unterscheidet sich von dem der Fig. 1 und 2 im wesentlichen dadurch, dass das Schneidrad 8 und das Anpressrad 10 der Schneidrichtung gleichzeitig als Antriebsräder für die Bänder 2 und 3 dienen. Damit ist der Weg von der Einlaufseite der Bänder bis zur Schneideinrichtung auf ein Minimum reduziert.

Im Ausführungsbeispiel der Fig. 3 und 4 sind die Antriebsräder 4 und 5 dem Gurtförderer (Bänder 2 und 3) vorgeschaltet und dienen als Transportrollenpaar für die Elektrode 1 sowie — wie beim Ausführungsbeispiel der Fig. 1 und 2 — als Antriebseinrichtungen für die Schneideinrichtung (Räder 8 und 10). Zur präziseren Führung der Elektrode längs der Strecke zwischen den Antriebsrädern 4 und 5 und der Einlaufseite des Gurtförderers kann ein Führungsrohr 29 vorgesehen sein, in dessen Inneren die Elektrode 1 verläuft.

Mit Ausnahme der beschriebenen Unterschiede stimmt das Ausführungsbeispiel der Fig. 3 und 4 mit dem der Fig. 1 und 2 überein.

Natürlich ist es bei dem Ausführungsbeispiel der Fig. 3 und 4 auch möglich, die beiden Antriebsräder 4 und 5 ganz fort zu lassen und die beiden Räder 8 und 10 direkt so anzutreiben, wie es bei den Antriebsrädern 4 und 5 im Ausführungsbeispiel der Fig. 1 und 2 erfolgt.

Aus den Fig. 1 und 3 ist zu erkennen, dass die Anpressplatten 11 des Anpressrades 10 als Vorsprünge ausgebildet sind, die in die Schneidöffnungen 22 des unteren Bandes 3 eingreifen. Es ist auch möglich, diese Vorsprünge so hoch zu machen, dass sie über die Mittelebene zwischen den beiden Bändern 2 und 3 hinausragen. Dadurch kann zum einen im Schneidbereich die Elektrode etwas vorgereckt werden und zum anderen wird — zusammen mit der Federvorspannung des Anpressrades 10 — eine ausreichend grosse Schneidkraft erzeugt.

Die Vorrichtung nach der Erfindung kann unmittelbar im Anschluss an die Arbeitszone bzw. Erosionszone der Elektroerosionsmaschine angeordnet werden, so dass im Ergebnis die Elektrode eine sehr kurze Strecke nach der Arbeitszone abgeschnitten wird. Der Entsorgungsbehälter 26 kann dagegen beliebig weit von der Schneideinrichtung angeordnet sein, entsprechend der gewählten Länge 1 des austragsseitigen Endes des Gurtförderers.

Der Gurtförderer bzw. die Elektrodenfördereinrichtung der Vorrichtung nach der Erfindung kann auch gleichzeitig als Abzugseinrichtung für die Elektrode aus der Arbeitszone der Elektroerosionsmaschine dienen, so dass dort keine weitere Abzugseinrichtung beispielsweise in Form eines Abzugsrollenpaares benötigt wird.

Sämtliche in den Patentansprüchen, der Beschreibung und der Zeichnung dargestellten technischen Einzelheiten können sowohl für sich als auch in beliebiger Kombination miteinander erfindungswesentlich sein.

## Patentansprüche

1. Vorrichtung zum Abtrennen einer band- oder drahtförmigen Elektrode einer Elektroerosionsmaschine, mit Transporteinrichtungen zur Bewegung der Elektrode und mit Schneideinrichtungen zum stückweise abtrennen der Elektrode, dadurch gekennzeichnet, dass die Transporteinrichtungen einen Gurtförderer aufweisen, zwischen dessen Bändern (2, 3) die Elektrode (1) geführt ist, dass die Bänder (2, 3) mehrere, einander gegenüberliegende, in konstanten Abständen angeordnete Schneidöffnungen (22) aufweisen, wobei die Bänder (2, 3) und die Schneideinrichtungen (8, 9 ; 10, 11) synchron miteinander bewegt werden, derart, dass die Schneideinrichtungen (9, 11) jeweils durch die Schneidöffnungen (22) hindurchgreifen und dass die abgetrennten Elektrodenstücke (27) von dem Gurtförderer zu einem entfernt (Länge 1) angeordneten Entsorgungsbehälter (26) gefördert werden.

2. Vorrichtung nach Anspruch 1, dadurch gekennzeichnet, dass die Bänder (2, 3) einen Innenverzahnung und die ihnen zugeordneten Antriebsräder (4, 5 bzw. 8, 10) eine Aussenverzahnung aufweisen.

3. Vorrichtung nach Anspruch 2, dadurch gekennzeichnet, dass die Antriebsräder (8, 10) gleichzeitig Schneidelemente (9) bzw. Gegenelemente (11) tragende Räder sind.

4. Vorrichtung nach Anspruch 1 oder 2, dadurch gekennzeichnet, dass die Antriebsräder (4, 5) über Zahnriemen (6, 7) die eine Aussenverzahnung aufweisenden Schneid- und Anpressräder (8, 10) antreiben.

5. Vorrichtung nach einem oder mehreren der Ansprüche 1 bis 4, dadurch gekennzeichnet, dass der Gurtförderer und die Schneideinrichtung von einer gemeinsamen Antriebseinrichtung angetrieben werden, vorzugsweise über einen Riemen des Drahtfördersystems der Elektroerosionsmaschine.

6. Vorrichtung nach einem oder mehreren der Ansprüche 1 bis 5, dadurch gekennzeichnet, dass die Antriebsräder (4, 5 bzw. 8, 10) der Bänder (2, 3) starr miteinander gekoppelt sind, vorzugsweise über ein Getriebe (24).

7. Vorrichtung nach einem oder mehreren der Ansprüche 1 bis 6, dadurch gekennzeichnet, dass das Anpressrad (10) der Schneideinrichtung an seinem Umfang verteilt angeordnete Vorsprünge (11) aufweist, deren Abstand in Umfangsrichtung dem Abstand der Schneidöffnung (22) in Längsrichtung der Bänder (2, 3) entspricht, dass diese Vorsprünge (11) die Schneidöffnung (22) zumindest teilweise durchgreifen und dass das Schneidrad (8) den Vorsprüngen (11) zugeordnete Schneidelemente (Messer) (9) aufweist.

8. Vorrichtung nach einem oder mehreren der Ansprüche 1 bis 7, dadurch gekennzeichnet, dass das Schneidrad (8) und/oder das Anpressrad (10) verschiebbar gelagert sind und mittels Federkraft (Feder 13) gegeneinander gedrückt werden, wobei ein Anschlag (28) den Federweg begrenzt.

9. Vorrichtung nach einem oder mehreren der Ansprüche 1 bis 8, dadurch gekennzeichnet, dass sie unmittelbar im Anschluss an die Arbeitszone (Erosionszone) der Elektroerosionsmaschine angeordnet ist.

10. Vorrichtung nach Anspruch 9, dadurch gekennzeichnet, dass der Gurtförderer als Abzugseinrichtung dient, welche die Elektrode aus der Arbeitszone (Erosionszone) der Elektroerosionsmaschine abzieht.

## Claims

1. Apparatus for severing a band- or wire-type electrode of an electroerosion machine, having transporting devices for moving the electrode and cutting devices for severing the electrode into pieces, characterised in that the transporting devices have a belt conveyor, between the bands (2, 3) of which the electrode (1) is guided, in that the bands (2, 3) have several cutting openings (22) which lie opposite each other and are arranged at constant intervals, with the bands (2, 3) and the cutting devices (8, 9 ; 10, 11) being moved in synchronism with each other in such a way that the cutting devices (9, 11) reach, in each case, through the cutting openings (22), and in that the severed electrode pieces (27) are conveyed by the belt conveyor to a remotely (length 1) arranged disposal container (26).

2. Apparatus according to claim 1, characterised in that the bands (2, 3) are toothed internally and drive wheels (4, 5 or 8, 10) coordinated with them are externally toothed.

3. Apparatus according to claim 2, characterised in that the drive wheels (8, 10) are also wheels bearing cutting elements (9) or counterelements (11) as the case may be.

4. Apparatus according to claim 1 or 2, characterised in that the drive wheels (4, 5) drive the cutting and pressure wheels (8, 10), which are externally toothed, by way of toothed belts (6, 7).

5. Apparatus according to one or more of the claims 1 to 4, characterised in that the belt conveyor and the cutting device are driven by a common driving device, preferably by way of a belt of the wire-conveying system of the electroerosion machine.

6. Apparatus according to one or more of the claims 1 to 5, characterised in that the drive wheels (4, 5 or 8, 10) of the bands (2, 3) are coupled in fixed relation to one another, preferably by way of a gear unit (24).

7. Apparatus according to one or more of the claims 1 to 6, characterised in that the pressure wheel (10) of the cutting device has projections (11) which are arranged distributed around its periphery with a spacing in the peripheral direction corresponding to the spacing of the cutting openings (22) in the longitudinal direction of the bands (2, 3), in that these projections (11) reach at least in part through the cutting openings (22) and in that the cutting wheel (8) has cutting elements (blades) (9) which are coordinated with the projections (11).

8. Apparatus according to one or more of the claims 1 to 7, characterised in that the cutting wheel (8) and/or the pressure wheel (10) are mounted in a displaceable manner and are pressed against each other by means of spring force (spring 13), a stop (28) limiting the spring travel.

9. Apparatus according to one or more of the claims 1 to 8, characterised by being arranged immediately following the work zone (erosion zone) of the electroerosion machine.

10. Apparatus according to claim 9, characterised in that the belt conveyor serves as a take-up device which pulls the electrode away from the work zone (erosion zone) of the electroerosion machine.


**Revendications**

1. Dispositif pour séparer une électrode en forme de bande ou de fil pour une machine d'électro-érosion, équipé de moyens de transport de l'électrode et de moyens de coupe pour séparer l'électrode en tronçons, caractérisé en ce que les moyens de transport comprennent un transporteur à bandes (2, 3) entre lesquels l'électrode (1) est guidée, les bandes (2 et 3) présentant un certain nombre d'ouvertures de découpe (22), se faisant face et régulièrement réparties, les bandes (2, et 3) et les moyens de coupe (8, 9 ; 10, 11) se déplaçant en synchronisme, de telle sorte que les moyens de coupe (9, 11) traversent chacun les ouvertures de découpe (22) et que les tronçons séparés d'électrode (27) soient amenés, du transporteur à bandes vers un récipient de décharge (26) disposé à distance (longueur 1).

2. Dispositif selon la revendication 1, caractérisé en ce que les bandes (2, 3) présentent une denture intérieure et leurs roues d'entraînement associées (4, 5 ; 8, 10) une denture extérieure.

3. Dispositif selon la revendication 2, caractérisé en ce que les roues d'entraînement (8, 10) portent également des organes de coupe (9) et des organes opposés (11).

4. Dispositif selon la revendication 1 ou 2, caractérisé en ce que les roues d'entraînement (4, 5) entraînent les roues de coupe et de pression (8, 10) munies d'une denture extérieure par l'intermédiaire de courroies crantées (6, 7).

5. Dispositif selon l'une quelconque des revendications 1 à 4, caractérisé en ce que le transporteur à bandes et les moyens de coupe sont entraînés par des moyens d'entraînement communs, de préférence à l'aide d'une courroie du système de transport du fil de la machine d'électro-érosion.

6. Dispositif selon l'une quelconque des revendications 1 à 5, caractérisé en ce que les roues d'entraînement (4, 5 ; 8, 10) des bandes (2, 3) sont accouplées rigidement entre elles, de préférence à l'aide d'une transmission (24).

7. Dispositif selon l'une quelconque des revendications 1 à 6, caractérisé en ce que la roue de pression (10) des moyens de coupe présente des saillies (11) réparties sur sa périphérie, dont l'écartement circulaire correspond à celui des ouvertures de découpe (22) sur la longueur des bandes (2, 3), ces saillies (11) pénétrant, au moins partiellement, dans les ouvertures de découpe (22) et en ce que la roue de coupe (8) présente des organes de coupe (ou couteaux) (9) associés aux saillies (11).

8. Dispositif selon l'une quelconque des revendications 1 à 7, caractérisé en ce que la roue de coupe (8) et/ou la roue de pression (10) sont supportées par un palier de façon mobile et pressées l'une contre l'autre par une force élastique (ressort 13), une butée (28) limitant la course du ressort.

9. Dispositif selon l'une quelconque des revendications 1 à 8, caractérisé en ce qu'il est disposé immédiatement au contact de la zone de travail (zone d'érosion) de la machine d'électro-érosion.

10. Dispositif selon la revendication 9, caractérisé en ce que le transporteur à bandes sert de dispositif de traction, arrachant l'électrode de la zone de travail (zone d'érosion).

Fig.1

Fig.2

Fig. 3

Fig. 4

0 198 229